## Europäisches Patentamt

## European Patent Office

## Office européen des brevets

(11) Veröffentlichungsnummer: **0 147 511**
**B1**

(12) ## EUROPÄISCHE PATENTSCHRIFT

(45) Veröffentlichungstag der Patentschrift:
**31.08.88**

(21) Anmeldenummer: **84107143.4**

(22) Anmeldetag: **22.06.84**

(51) Int. Cl.⁴: **F 16 B 21/16,** F 16 B 3/00, E 21 B 19/06, E 21 B 19/10, E 21 B 19/16

(54) Vorrichtung zur Kraftübertragung, insbesondere beim Abfangen von Bohrgestängen.

(30) Priorität: **21.12.83 ZA 839490**

(43) Veröffentlichungstag der Anmeldung:
**10.07.85 Patentblatt 85/28**

(45) Bekanntmachung des Hinweises auf die Patenterteilung:
**31.08.88 Patentblatt 88/35**

(84) Benannte Vertragsstaaten:
**AT BE CH DE FR GB IT LI LU NL SE**

(56) Entgegenhaltungen:
**DE-A-2 263 428**
**FR-A-2 489 393**
**FR-A-2 512 134**
**GB-A-761 118**
**GB-A-934 369**
**GB-A-2 056 409**
**US-A-3 109 289**
**US-A-3 343 371**
**US-A-3 463 247**
**US-A-3 554 298**
**US-A-3 561 316**
**US-A-3 598 369**
**US-A-3 939 991**

(73) Patentinhaber: **Wirth Maschinen- und Bohrgeräte-Fabrik GmbH, Kölner Strasse 71- 78, D-5140 Erkelenz (DE)**

(72) Erfinder: **Kleuters, Nikolaus, Walderych 27, D-5130 Geilenkirchen (DE)**

(74) Vertreter: **Koscholke, Gotthold, Dr.- Ing., Rheinallee 147, D-4000 Düsseldorf 11 (DE)**

## Beschreibung

Die Erfindung bezieht sich auf eine Abfangvorrichtung nach dem Oberbegriff des Anspruchs 1.

Bekannte Bohrgestängeteile oder Bohrrohre haben üblicherweise jeweils im Bereich eines Endes zwei axialen Abstand voneinander aufweisende Anordnungen von sog. Schlüsselflächen. Zwischen diesen befindet sich eine Schulter oder Anlagefläche für die Oberseite eines z. B. hufeisenförmigen Einschiebestückes, dessen Innenseiten sich parallel zu unterhalb der Schulter des Gestängeteiles an diesem vorgesehenen Flächen erstrecken. Ein solches Einschiebestück bildet das Haltemittel beim Abfangen des Gestänges und ruht selbst auf einem Widerlager auf, z. B. einem Abfangring, Tisch, Maschinenrahmen od.dgl. Die andere Anordnung von Schlüsselflächen oberhalb der erwähnten Schulter hat keine tragende oder lastaufnehmende Funktion, sondern dient lediglich dem Angriff eines entsprechenden Schlüssels, um den Gestängeteil gegen Drehen zu halten, wenn zum Brechen des Gestänges ein darüber befindlicher Gestängeteil abgeschraubt werden soll. Solche Ausbildungen sind aus der US-A-3 463 247 und der US-A-3 554 298 bekannt.

Auch bei einem Bohrgerät nach der DE-A-2 263 428 ist eine im Prinzip gleiche Abfangvorrichtung vorhanden. Ein Bohrgestängeteil weist dabei im Bereich jedes Endes zwei Schlüsselflächenanordnungen mit axialem Abstand voneinander auf. Diese sind so gestaltet, daß zwar jeweils in mehreren, axialen Abstand voneinander aufweisenden Querebenen liegende Flächenbereiche verbleiben, jedoch sind nur die Flächenbereiche einer Ebene dabei Stützflächen, an denen die Oberseite eines sog. Zangenkörpers zur Anlage kommt, wenn das Gestänge abgefangen wird. In Verbindung mit einem Bohrkopf ist ein weiterer Zangenkörper für das obere Gestängeende vorgesehen, der an Schlüsselflächen angesetzt wird, aber keine Stütz- oder Abfangfunktion hat.

Die erwähnte Schulter bzw. die in einer Querebene liegende Stützflächenbereiche werden beim Abfangen eines Gestängestranges mit dem vollen Gewicht des letzteren belastet. Durch die Entwicklung der Bohrtechnik, die zu Bohrsträngen von großer Länge führt oder dazu, daß ein Bohrstrang große Bohrköpfe und andere schwere Aggregate zu tragen hat, kommt es zu immer größeren von den Haltemitteln aufzunehmenden Gewichten. Dies gilt u. a. für das sog. Raise-Bohrverfahren.

Es ergeben sich dann sehr hohe Lasten an der Schulter bzw. der Stützfläche des Gestängeteiles und entsprechend an dem damit in Berührung zu bringenden Einschiebestück oder Zangenkörper als Haltemittel. Dies führt zu einer hohen Flächenpressung und zu einem hohen Biegemoment an der Schulter. Die Fläche, die an dieser zur Verfügung steht, ist verhältnismäßig klein und kann auch nicht nennenswert vergrößert werden, weil bei vorgegebenen Abmessungen des Gestängeteiles dann zu wenig Material im Bereich des verringerten Querschnitts unterhalb der Schulter verbleiben würde.

Hiernach ist es Aufgabe der Erfindung, eine Abfangvorrichtung für ein Bohrgestänge der erläuterten Gattung so auszubilden, daß auch große Lasten sicher aufgenommen werden können. Die Erfindung strebt dabei auch vorteilhafte Ausbildungen einer solchen Vorrichtung im einzelnen an. Weitere mit alledem in Verbindung stehende Probleme, mit denen sich die Erfindung befaßt, ergeben sich aus der jeweiligen Erläuterung der aufgezeigten Lösung.

Die Merkmale zur Lösung der Aufgabe sind in den kennzeichnenden Teilen der Ansprüche 1 und 10 angegeben. Vorteilhafte weitere Ausbildungen ergeben sich aus den zugehörigen Unteransprüchen.

Außer wenigstens zwei Stützflächen kann, namentlich zwischen diesen und einem Ende des Bohrgestängeteiles, eine an sich bekannte Schlüsselflächen-Anordnung vorgesehen sein, die dazu dient, den Bohrgestängeteil gegen Drehung zu halten, wenn dies bei bestimmten Arbeitsgängen erforderlich ist, wie insbesondere beim Abschrauben eines sich anschließenden Teiles eines Bohrgestänges. Es ist aber auch möglich und liegt im Rahmen der Erfindung, den Querschnitt des Bohrgestängeteiles unterhalb wenigstens einer der Stützflächen so auszubilden, daß sich Schlüsselflächen ergeben, denen entsprechend ausgebildete Haltemittel so zugeordnet sind, daß nicht nur eine Belastung in axialer Richtung, sondern ein Moment in Umfangsrichtung, also ein Drehmoment, aufgenommen werden kann.

Grundsätzlich wird es für die meisten Fälle ausreichend sein, zwei Stützflächen-Anordnungen in zwei Ebenen mit Abstand voneinander vorzusehen. Die Erfindung schließt aber auch eine noch größere Zahl von Stützflächen in weiteren Ebenen ein, wenn dies erforderlich oder zweckdienlich ist.

Die den Stützflächen-Anordnungen zugeordneten Halteflächen können bei einer Ausführung der Vorrichtung an einem aus einem Stück bestehenden Halteteil so vorgesehen sein, daß ihr Abstand möglichst genau dem Abstand der Stützflächen voneinander entspricht. Es tragen dann die Halteflächen entsprechend ihrem Kontakt mit den Stützflächen. Die Einhaltung der notwendigen Genauigkeit kann jedoch Schwierigkeiten mit sich bringen. Deshalb werden nachstehend weitere Ausführungen erläutert, bei denen keine hohe Genauigkeit bezüglich des Abstandes der Halteflächen voneinander erforderlich ist und trotzdem eine erwünschte gleichmäßige Lastverteilung erzielbar ist.

So besteht eine vorteilhafte Ausführung darin, daß Abstand voneinander aufweisende Halteflächen an einzelnen Halterungen

vorgesehen sind, von denen jede eine eigene Auflagerung hat. Die Ausbildung der letzteren läßt sich dann auf verschiedene Weise so treffen, daß die Belastung der Halteflächen und der zugehörigen Stützflächen gleichmäßig ist. Insbesondere ist dabei wenigstens eine Auflagerung für eine Halterung in ihrer Position veränderbar. Besonders vorteilhaft kommt eine Druckmittelabstützung in Betracht. Dabei kann die Auflagerung für die Halterung in einer Ebene starr ausgebildet sein, während die Auflagerung für die Halterung in wenigstens einer weiteren Ebene eine Druckmittelabstützung enthält.

Bei einer anderen Ausführung ist für jede Auflagerung der Halterungen in den verschiedenen Ebenen eine Druckmittelabstützung vorgesehen. Die letzteren können im Sinne eines Druckausgleichs miteinander in Verbindung stehen oder aber auch voneinander getrennt sein.

Als Druckmittel kommt insbesondere eine Hydraulikflüssigkeit in Betracht. Für die Ausbildung der Druckmittelabstützung bestehen im einzelnen mehrere Möglichkeiten, sowohl hinsichtlich des Systems als auch der räumlichen Ausbildung und Anordnung.

Auch für die Haltemittel sind zahlreiche Ausführungsmöglichkeiten gegeben, und zwar auch besonders hinsichtlich derjenigen Partien, die im Betriebszustand den Körper, insbesondere einen Bohrgestängeteil, unterhalb der jeweiligen Stützfläche umgeben. Der Körper kann in diesem Bereich annähernd einen Mehrkantquerschnitt, insbesondere einen quadratischen Querschnitt mit abgeflachten Kanten, oder aber auch einen runden Querschnitt haben. Letzteres ist dann von Vorteil, wenn kein Drehmoment aufzunehmen ist, weil sich dadurch eine noch bessere Flächenausnutzung ergibt.

Die Erfindung ist mit besonderem Vorteil bei Bohrgestängen bzw. zum Abfangen eines Bohrstranges anwendbar. Sie kommt darüber hinaus aber auch noch für andere Fälle in Betracht, in denen eine sichere Aufnahme oder Übertragung von Kräften gefordert wird, so insbesondere bei Zugankern, beispielsweise Felsankern und vergleichbaren Gegenständen.

Weitere Einzelheiten, Merkmale und Vorteile der Erfindung ergeben sich aus der nachstehenden Erläuterung von Ausführungsbeispielen, aus der zugehörigen Zeichnung und aus den Ansprüchen. Es zeigen:

Fig. 1    einen teils schematischen vertikalen Schnitt durch eine Hälfte einer ersten Ausführung der Vorrichtung zusammen mit dem oberen Ende eines Bohrgestänge-Teiles,

Fig. 2    eine weitere Ausführung der Vorrichtung im vertikalen Schnitt,

Fig. 3    einen Schnitt nach der Linie III - III in Fig. 2,

Fig. 4    eine weitere Ausführung der Vorrichtung im vertikalen Schnitt,

Fig. 5    einen Schnitt nach der Linie V - V in Fig. 4,

Fig. 6    eine weitere Ausführung der Vorrichtung im vertikalen Schnitt,

Fig. 7    einen Schnitt nach der Linie VII - VII in Fig. 6,

Fig. 8    eine weitere Ausführung der Vorrichtung im vertikalen Schnitt,

Fig. 9    einen Schnitt nach der Linie IX - IX in Fig. 8 und

Fig. 10    eine weitere Ausführung der Vorrichtung in vertikalem Schnitt.

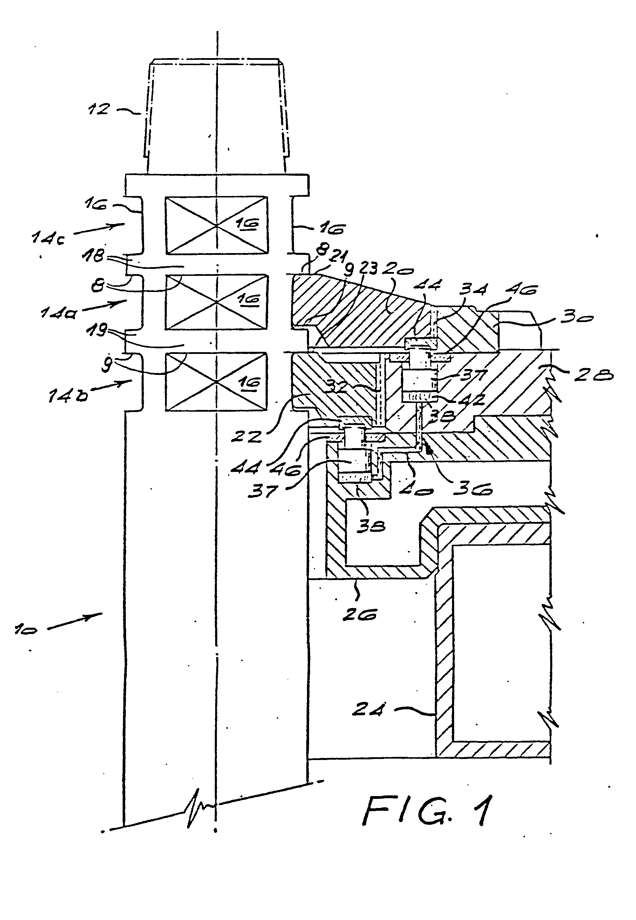

In Fig. 1 bezeichnet die Ziffer 10 ein Rohr oder einen Bohrgestängeteil, der zu einem Bohrstrang gehört, wie er beispielsweise beim Raise-Bohrverfahren verwendet wird. Der Bohrgestängeteil 10 hat an seinem oberen Ende einen Gewindezapfen 12 und an seinem nicht dargestellten unteren Ende eine entsprechende Gewindebohrung zur Aufnahme eines Gewindezapfens 12 des nächsten sich nach unten hin anschließenden Bohrgestängeteiles. Im Gegensatz zu üblichen Ausführungen weist der Bohrgestängeteil 10 drei Sätze oder Anordnungen 14a, 14b, 14c von Abflächungen auf. Bei dem gezeigten Ausführungsbeispiel sind in jedem Satz 14 vier ebene Flächen 16 vorhanden, die jeweils in einem Winkel von 90° zueinander stehen. In axialer Richtung sind die Flächen 16 jedes Satzes durch Schultern 18 und 19 voneinander getrennt, die den vollen Querschnitt des Bohrgestängeteiles haben und die mit ihren Unterseiten Stützflächen 8 und 9 bilden.

Diese Ausführung gestattet die Aufnahme des Gewichts des Bohrstranges und eines daran befindlichen Bohrkopfes an den beiden Stützflächenanordnungen an den Schultern 18 und 19, anstatt nur an einer solchen Anordnung, wie es bisher der Fall war. Die Flächen 16 der oberen Anordnung 14c dienen zum Angriff eines Schlüssels beim Brechen oder Auseinanderschrauben des Gestänges.

Den von den Schultern 18 und 19 gebildeten Stützflächen 8 und 9 sind Halterungen zugeordnet, die bei der Ausführung nach Fig. 1 durch einen oberen geteilten Ring 20 und einen unteren geteilten Ring 22 gebildet werden. Dabei ist in Fig. 1 jeweils nur eine Hälfte dieser Ringe und der zugehörigen Teile gezeigt. Die andere Hälfte derselben ist spiegelbildlich dazu zu denken. Diese Ringteile können bei angehobenem Gestänge in an sich bekannter Weise von außen her radial eingeschoben werden, so daß sie jeweils in die Bereiche unter den Schultern 18 und 19 eingreifen. Der obere Ring 20 weist eine der Stützfläche 8 zugeordnete Haltefläche 21 und der untere Ring 22 eine der Stützfläche 9 zugeordnete Haltefläche 23 auf.

Ein Widerlager zur Aufnahme der Kräfte wird durch einen sich z. B. auf dem Erdboden oder einem Rahmen abstützenden Tisch 24 und einen Tragkörper 26 gebildet, jeweils mit innerem Durchlaß für das Bohrgestänge. Darauf befinden sich zwei Aufnahmeteile 28 und 30 mit jeweils einer Profilierung 32 und 34 am Innenumfang, z. B. einer Nut-Feder- oder Keilnuten-Anordnung. Die geteilten Ringe 20 und 22 weisen jeweils am Außenumfang entsprechende Profilierungen auf, so daß sie mit den Aufnahmeteilen 28 und 30 zum Eingriff kommen können, wenn sie zusammen mit dem Bohrgestängeteil 10 aus einer Position oberhalb der gesamten Widerlager-Anordnung 24, 26, 28, 30 abgesenkt werden. Die geteilten Ringe 20 und 22 werden in axialer Richtung so positioniert, daß jeder von ihnen zur Anlage an der betreffenden Stützfläche 8 bzw. 9 an der Unterseite der Schulter 18 bzw. 19 kommen kann. Dazu gibt es mehrere Möglichkeiten.

So können abweichend von der Darstellung in Fig. 1 die Ringe 20 und 22 aus einem Stück bestehen oder miteinander zu einer Einheit verbunden sein, derart, daß sich dann ein einziger Halteteil ergibt, der sich auf Widerlagerteilen darunter abstützen kann. Damit das Gewicht des Bohrstranges möglichst gleichmäßig von den Halteflächen 21, 23 aufgenommen werden kann, müssen diese einen Abstand voneinander haben, der möglichst genau dem axialen Abstand der Stützflächen 8 und 9 an den Unterseiten der Schultern 18 und 19 entspricht. Dazu ist eine genaue Bearbeitung und Montage der betreffenden Teile notwendig.

Bei der in Fig. 1 im einzelnen gezeigten Ausführung mit getrennten Halterungen 20 und 22 ist dagegen eine solche Genauigkeit nicht erforderlich. Es ist hierbei ein insgesamt mit der Ziffer 36 bezeichnetes Ausgleichssystem vorgesehen. Sowohl in dem Aufnahmeteil 28 als auch in dem Tragkörper 26 der Widerlager-Anordnung sind Zylinder 38 vorgesehen, in denen Kolben 37 verschiebbar sind. Die Zylinder 38 stehen über einen Kanal 40 miteinander in Verbindung und sind zum Teil mit Hydraulikflüssigkeit gefüllt, wie bei der Ziffer 42 angedeutet ist. Es ist eine größere Zahl von solchen Kolben-Zylinder-Kombinationen 37, 38 vorhanden, die über den Umfang der geteilten Ringe 20 und 22 verteilt angeordnet und miteinander verbunden sind. An jedem Ringteil 20 und 22 befinden sich an den entsprechenden Stellen Lagerplatten 44, mit denen der jeweilige Teil auf der Stirnfläche des betreffenden Kolbens 37 aufliegt. Die Kolbenstangen oder abgesetzten Teile der Kolben 37 sind in Buchsen 46 geführt, die in den Teilen 26 und 28 festgelegt sind.

Wenn sich beim Abfangen des Bohrstranges der Ring 20 mit seiner Haltefläche 21 früher an die Stützfläche 8 der zugehörigen Schulter 18 anlegen sollte als der Ring 22 mit seiner Haltefläche 23 an die Stützfläche 9 der darunter befindlichen Schulter 19, so hat er nur für kurze Zeit das gesamte Gewicht aufzunehmen. Die oberen Kolben 37 werden nämlich dann in ihre Zylinder 38 eingeschoben und verdrängen dabei Hydraulikflüssigkeit zu den unteren Zylindern 38 hin. Dadurch werden die unteren Kolben 37 und durch diese der untere Ring 22 nach oben gedrückt, so daß die Haltefläche 23 an diesem zur Anlage an die Stützfläche 9 der zugehörigen Schulter 19 kommt. Wenn sich der hydraulische Druck in allen Zylindern 38 ausgeglichen hat, dann sind die Ringe 20 und 22 mit ihren Halteflächen 21 und 23 und somit auch die Stützflächen 8 und 9 an den Schultern 18 und 19 jeweils mit der gleichen Kraft belastet. Dadurch wird das aufzunehmende Gewicht des Bohrstranges gleichmäßig auf die beiden Schultern 18 und 19 verteilt, so daß keine derselben unzulässig hoch beansprucht wird.

Im Rahmen der Erfindung ist es möglich, auch mehr als zwei Stützflächen-Anordnungen vorzusehen, insbesondere zusätzlich zu einer darüber liegenden Schlüsselflächen-Anordnung zum Angriff eines für das Brechen des Gestänges verwendeten Schlüssels. Es sind dann entsprechende Ausgleichseinrichtungen vorhanden, so daß alle Stützflächen mit gleichem Anteil belastet werden.

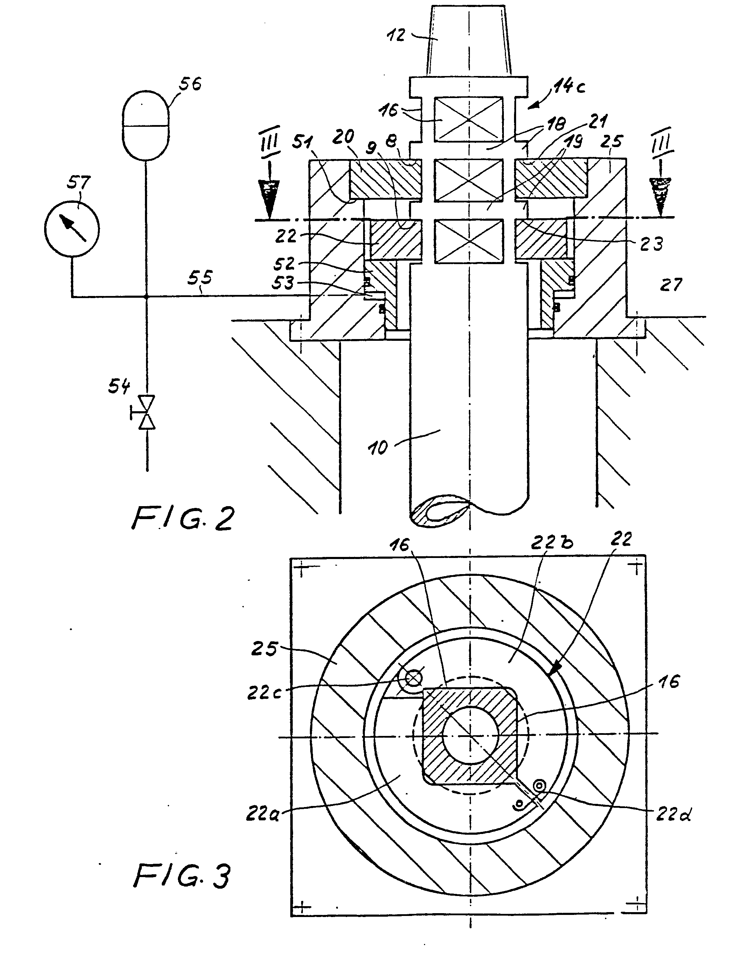

Bei den Ausführungen nach den Fig. 2 bis 10 ist jeweils ein Bohrgestänge-Teil oder ein anderer langgestreckter Körper 10 bzw. 11 wiedergegeben. Ein topfförmiges Widerlager ist ungeachtet der Ausbildung im einzelnen mit der Ziffer 25 bezeichnet. Dasselbe ruht auf einem Rahmen, Untersatz 27 od. dgl. Der Körper 10 bzw. 11 ist wie bei der Ausführung nach Fig. 1 mit Schultern 18, 19 und unterseitig von diesen gebildeten Stützflächen 8, 9 versehen, an denen Halteflächen 21, 23 der (ungeachtet ihrer Ausbildung im einzelnen) durchweg auch hier mit den Ziffern 20 und 22 bezeichneten Halterungen zur Anlage kommen. Auch sonst sind in diesen Figuren gleiche oder einander entsprechende Teile mit gleichen Bezugsziffern bezeichnet. In den Fig. 3, 5, 7 und 9 ist erkennbar, daß die Halterung 22 jeweils ein aus zwei Teilen 22a, 22b bestehender Ring ist, wobei die Teile um ein Zapfengelenk 22c auseinander und zum Herumlegen um den Körper 10 bzw. 11 gegeneinander schwenkbar sind und in der Arbeitsposition durch einen Verschluß 22d gesichert werden können. Entsprechendes gilt für die Halterung 20. Es sind aber auch andere Ausbildungen solcher Halterungen möglich.

Bei der Ausführung nach Fig. 2 und 3 liegt die obere Halterung 20 im Betriebszustand fest auf einer starren Schulter 51 des Widerlagers 25 auf. Die untere Halterung 22 ist dagegen hydraulisch abgestützt, und zwar über einen Ringkolben 52, der in einem vom Widerlager 25 gebildeten oder darin vorgesehenen Zylinder vertikal verschiebbar ist. Der Zylinderraum 53 ist über die Leitung 55 an ein Hydrauliksystem angeschlossen, das einen Druckspeicher 56 und ein Manometer 57 enthält und dem von einer nicht gezeigten Quelle aus über ein Absperrventil 54 Hydraulikflüssigkeit mit vorgebbarem Druck zugeführt werden kann. Mittels dieses Systems kann die untere Halterung 22 mittels des Ringkolbens 52 so abgestützt werden, daß eine zumindest annähernd gleiche Lastverteilung für beide Halterungen 20 und 22 erreicht wird.

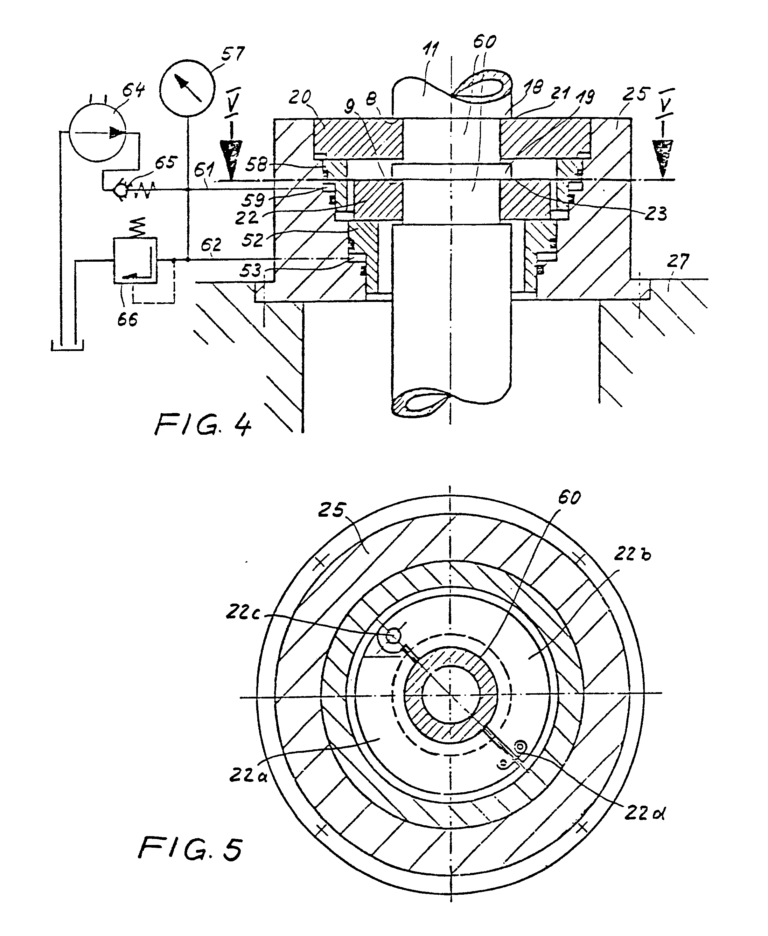

In den Fig. 4 und 5 ist eine Ausführung gezeigt, bei der beide Halterungen 20 und 22 hydraulisch gegenüber dem Widerlager 25 abgestützt sind, und zwar über Ringkolben 52 und 58. Die zugehörigen Zylinderräume 53 und 59 sind über Leitungen 61 und 62 an ein Hydrauliksystem angeschlossen, das von einer aus einem Tank 63 ansaugenden Pumpe 64 über ein Rückschlagventil 65 gespeist wird und ein Druckbegrenzungsventil 66 sowie ein Manometer 57 enthält. Bei gleichen wirksamen Kolbenflächen übernehmen beide Halterungen 20 und 22 gleiche Anteile der Gewichtsbelastung. Die Größe der Stützkraft ist am Druckbegrenzungsventil 66 gemäß Manometeranzeige einstellbar.

In den Fig. 4 und 5 ist unabhängig von der sonstigen Ausbildung noch das besondere Merkmal gezeigt, daß der Körper 11 unterhalb der Schultern 18 und 19 Bereiche 60 mit zylindrischer Form, also mit Kreisquerschnitt, statt eines etwa quadratischen Querschnitts wie bei den bisher erläuterten Ausführungen hat. Dementsprechend sind auch die Halgerungen rund ausgebildet, wie aus Fig. 5 erkennbar ist. Dadurch ergeben sich sehr günstige Flächenverhältnisse.

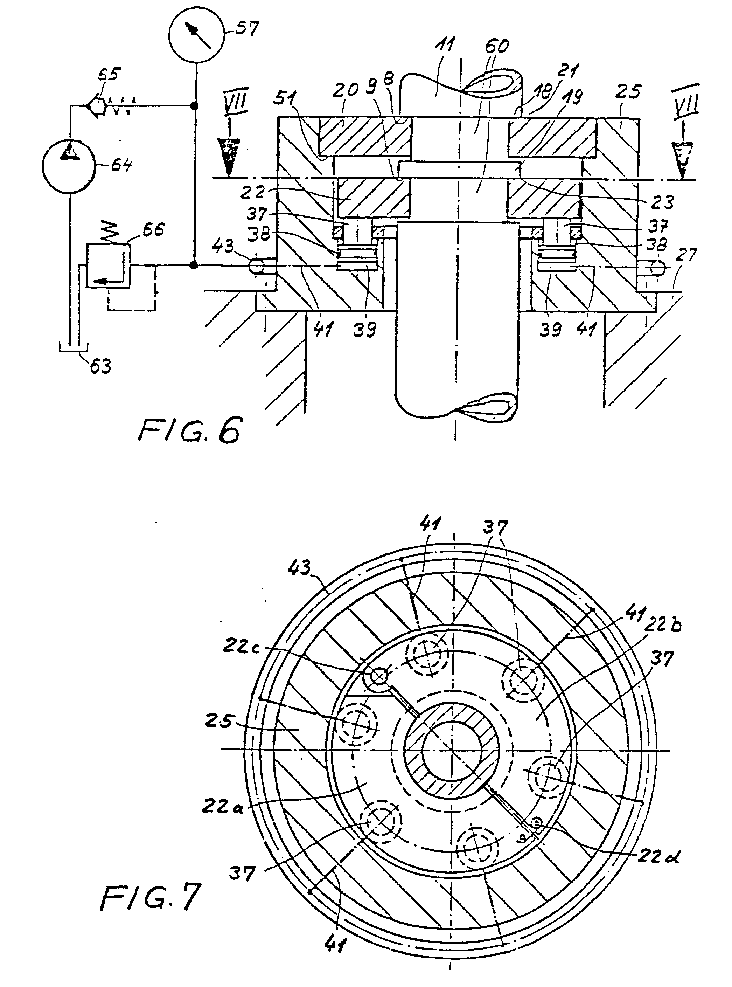

Bei der Ausführung nach den Fig. 6 und 7 ist wie bei derjenigen nach den Fig. 4 und 5 ein Gestängeteil oder sonstiger langgestreckter Körper 11 mit zylindrischen Bereichen 60 unterhalb der Schultern 18 und 19 gezeigt. Die obere Halterung 20 ist wie in Fig. 2 starr an einer Schulter 51 im Widerlager 25 auf genommen, während die untere Halterung 22 hydraulisch abgestützt ist, und zwar mit Kolben 37, die in im Widerlager 25 über den Umfang der Halterung 22 verteilt angeordneten Zylindern 38 verschiebbar sind. Die Zylinderräume 39 sind über Stichleitungen 41 und eine Ringleitung 43 an ein Hydrauliksystem angeschlossen, das wie dasjenige nach Fig. 4 eine aus einem Tank 63 ansaugende Pumpe 64, ein Manometer 57 und ein Druckbegrenzungsventil 66 enthält, so daß das dazu Gesagte hier entsprechend gilt.

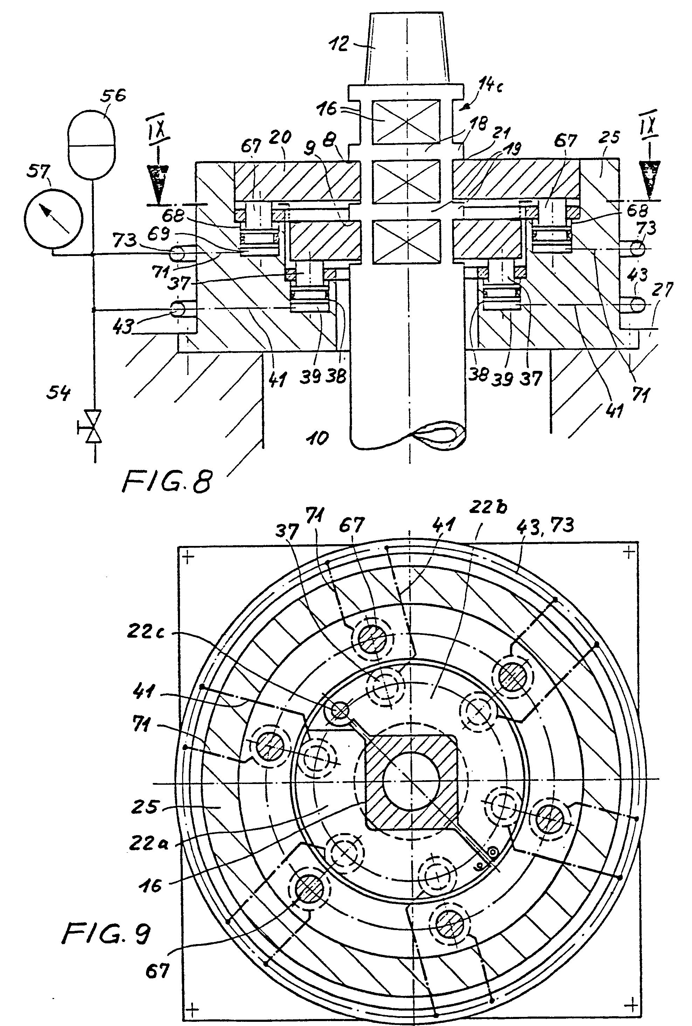

Die Ausführung nach den Fig. 8 und 9 hat für beide Halterungen 20 und 22 eine hydraulische Abstützung, und zwar mittels über den Umfang der letzteren verteilt angeordneter Kolben 37 und 67 in im Widerlager 25 vorgesehenen Zylindern 38 und 68, deren Zylinderräume 39, 69 über Stichleitungen 41 und 71 an Ringleitungen 43 und 73 angeschlossen sind, die mit einem hydraulischen System ähnlich demjenigen nach Fig. 2 verbunden sind. Dabei ist ein Speicher 56, ein Manometer 57 und ein Absperrventil 54 vorhanden, wobei über das letztere Hydraulikflüssigkeit mit vorgebbarem Druck von einer nicht gezeigten Quelle zuführbar ist.

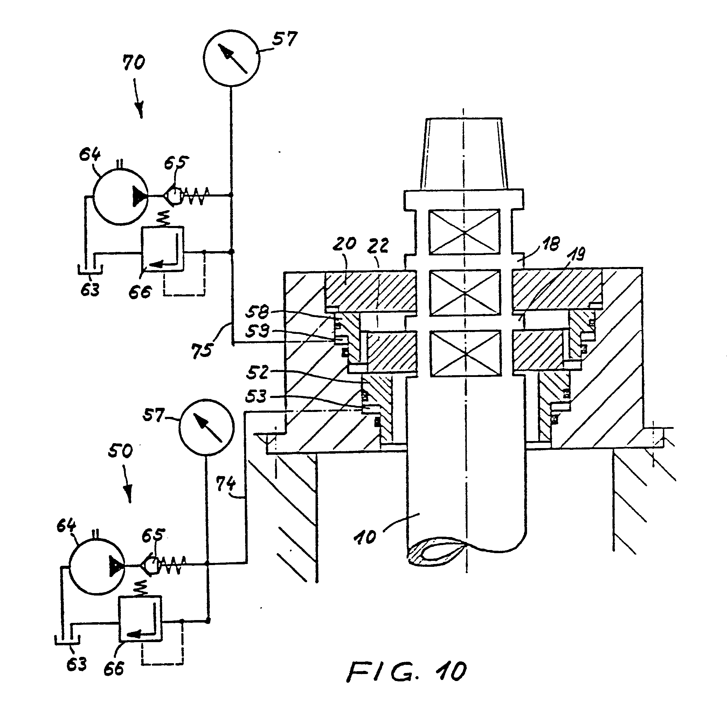

Schließlich ist in Fig. 10 eine Ausführung gezeigt, bei der beide Halterungen 20 und 22 für einen Bohrgestängeteil 10 hydraulisch abgestützt sind, und zwar mittels Ringkolben 52 und 58, ähnlich wie in Fig. 4. Jedoch ist hier jeder Zylinderraum 53 und 59 über eine Leitung 74 bzw. 75 an ein eigenes Hydrauliksystem 50 bzw. 70, jeweils mit Tank 63, Pumpe 64, Rückschlagventil 65, Manometer 57 und Druckbegrenzungsventil 66 angeschlossen. Beide Systeme lassen sich so einstellen, wie es den Erfordernissen am besten entspricht, insbesondere auf gleiche Belastung beider Halterungen mit dem zu tragenden Gewicht.

In den Zeichnungen ist nur ein Teil der im Rahmen der Erfindung liegenden Ausführungsmöglichkeiten dargestellt. Es sind dabei zahlreiche Varianten und Abwandlungen eingeschlossen. So können z. B. bei der Ausführung nach Fig. 2 unterhalb der Schultern 18 und 19 auch runde Querschnittsbereiche vorhanden sein, die Abstützung der Halterung 22 kann auch mit einzelnen Kolben erfolgen, das Hydrauliksystem kann mittels eines Druckbegrenzungsventils einstellbar sein, und es kann auch eine hydraulische Abstützung für die Halterung 20 vorhanden sein.

Bei der Ausführung nach Fig. 4 können anstelle der zylindrischen Bereiche 60 auch solche mit Mehrkantquerschnitt vorgesehen sein, die Abstützung läßt sich in beiden Ebenen auch mit Einzelkolben bewerkstelligen, und es kann ein Hydrauliksystem mit Druckspeicher vorhanden sein.

Weiterhin können bei der Ausführung nach Fig. 6 auch statt der zylindrischen Bereiche 60 solche mit Mehrkantquerschnitt vorhanden sein, die Abstützung läßt sich statt mit Einzelkolben durch einen Ringkolben bewerkstelligen, es kann ein Hydrauliksystem mit Druckspeicher vorhanden sein und es läßt sich eine Druckmittelabstützung auch für die zweite Ebene vorsehen.

Ebenso läßt sich zu der Ausführung nach Fig. 8 sagen, daß dort unterhalb der Schultern 18 und 19 auch zylindrische Bereiche vorgesehen sein können. Die hydraulische Abstützung kann in einer oder beiden Ebenen mit einem Hydrauliksystem erfolgen, das ein Druckbegrenzungsventil enthält. Statt Einzelkolben können für die hydraulische Abstützung auch Ringkolben vorgesehen sein.

Entsprechende Abwandlungsmöglichkeiten bestehen auch für die Ausführung nach Fig. 10.

**Patentansprüche**

Abfangvorrichtung eines Bohrgestänges (10, 11) an einem Widerlager (24, 26; 25), insbesondere einem Abfangring, Tisch, Maschinenrahmen od. dgl., wobei zwischen dem Widerlager (24, 26; 25) und dem Bohrgestängeteil (10, 11) an flächiger Anlage (8, 9) desselben zum Angriff bringbare Haltemittel (20, 22) lösbar vorgesehen sind, dadurch gekennzeichnet, daß im Bereich zumindest eines Endes des Bohrgestängeteiles (10, 11) wenigstens zwei in axialer Richtung Abstand voneinander aufweisende Stützflächen (8, 9) vorhanden sind und diesen Stützflächen (8, 9) zum gleichzeitigen Angriff an diesen zugeordnete Halteflächen (21, 23) an einzelnen Halterungen (20, 22) vorgesehen sind, von denen jeder eine eigene Auflagerung zugeordnet ist, wobei für die Halterung (22) in wenigstens einer Ebene eine Druckmittelabstützung (37, 38; 52, 53) vorhanden ist.

2. Vorrichtung nach Anspruch 1, dadurch gekennzeichnet, daß die Auflagerung (51) für die Halterung (20) in einer Ebene starr ausgebildet ist.

3. Vorrichtung nach Anspruch 1, dadurch gekennzeichnet, daß die Auflagerung für jede der Halterungen (20, 22) in den verschiedenen Ebenen eine Druckmittelabstützung (37, 38; 52, 53, 58, 59; 67, 68) enthält.

4. Vorrichtung nach Anspruch 3, dadurch gekennzeichnet, daß die Druckmittelabstützungen (37, 38; 52, 53, 58, 59; 67, 68) der Halterungen (20, 22) im Sinne eines Druckausgleichs miteinander in Verbindung stehen.

5. Vorrichtung nach Anspruch 3, dadurch gekennzeichnet, daß für die Halterungen (20, 22) getrennte Druckmittelabstützungen (50, 70) vorgesehen sind.

6. Vorrichtung nach einem der Ansprüche 1 bis 5, dadurch gekennzeichnet, daß für wenigstens eine Druckmittelabstützung (52, 53; 37, 38; 67, 68) ein System mit aufladbarem Druckmittelspeicher (56) vorgesehen ist.

7. Vorrichtung nach einem der Ansprüche 1 bis 5, dadurch gekennzeichnet, daß für wenigstens eine Druckmittelabstützung (37, 38; 52, 53, 58, 59) ein von einer Druckmittelquelle (64) zu speisendes System mit Druckbegrenzungsventil (66) vorgesehen ist.

8. Vorrichtung nach einem der Ansprüche 1 bis 7, dadurch gekennzeichnet, daß wenigstens eine Druckmittelabstützung mehrere Zylinder (38; 68) mit Stützkolben (37; 67) enthält.

9. Vorrichtung nach einem der Ansprüche 1 bis 7, dadurch gekennzeichnet, daß wenigstens eine Druckmittelabstützung einen ringförmigen Zylinder (53, 59) mit ringförmigem Stützkolben (52, 58) darin aufweist.

10. Vorrichtung nach einem der Ansprüche 1 bis 9, dadurch gekennzeichnet, daß an dem Körper (10) außer wenigstens zwei Stützflächen (8, 9) eine an sich bekannte Schlüsselflächenanordnung (14c) od. dgl. vorgesehen ist.

11. Vorrichtung nach einem der Ansprüche 1 bis 10, dadurch gekennzeichnet, daß der Körper (10) wenigstens unterhalb einer Stützfläche (8, 9) wenigstens annähernd einen Mehrkantquerschnitt aufweist.

12. Vorrichtung nach einem der Ansprüche 1 bis 10, dadurch gekennzeichnet, daß der Körper (11) wenigstens unterhalb einer Stützfläche (8, 9) einen runden Querschnitt (60) aufweist.

13. Vorrichtung nach einem der Ansprüche 1 bis 12, dadurch gekennzeichnet, daß die Haltemittel (20, 22) in an sich bekannter Weise zwei schwenkbar miteinander verbundene Teile (22a, 22b) aufweisen.

## Claims

1. Device for supporting a drilling rod (10, 11) on an abutment (24, 26; 25), in particular a supporting ring, table, machine frame or the like, holding means (20, 22) being detachably provided between the abutment (24, 26; 25) and the drilling rod part (10, 11) on a planar bearing (8, 9) thereof the holding means (20, 22) can be brought into engagement, characterised in that, in the region of at least one end of the drilling rod part (10, 11) at least two supporting surfaces (8, 9) are present spaced in the axial direction, and that holding surfaces (21, 23) associated with these supporting surfaces for simultaneous engagement therewith are provided on individual mountings (20, 22), with each of which is associated its own bearing, a pressure medium support (37, 38; 52, 53) being present for the mounting (22) in at least one plane.

2. Device according to claim 1, characterised in that the bearing (51) for the mounting (20) is designed fixed in one plane.

3. Device according to claim 1, characterised in that the bearing for each of the mountings (20, 22) in the various planes contains a pressure medium support (37, 38; 52, 53, 58, 59; 67, 68).

4. Device according to claim 3, characterised in that the pressure medium supports (37, 38; 52, 53, 58, 59; 67, 68) of the mountings (20, 22) are in connection with each other in the manner of a pressure equalisation.

5. Device according to claim 3, characterised in that separate pressure medium supports (50, 70) are provided for the mountings (20, 22).

6. Device according to one of claims 1 to 5, characterised in that a system is provided having a loadable pressure medium store (56) for at least one pressure medium support (52, 53; 37, 38; 67, 68).

7. Device according to one of claims 1 to 5, characterised in that a system for at least one pressure medium support (37, 38; 52, 53, 58, 59) is provided, the system having a pressure limiting valve (66) to be fed by a pressure medium source (64).

8. Device according to one of claims 1 to 7, characterised in that at least one pressure medium support comprises several cylinders (38; 68) with supporting pistons (37; 67).

9. Device according to one of claims 1 to 7, characterised in that at least one pressure medium support has a ring-shaped cylinder (53, 59) with a ring-shaped supporting piston (52, 58) therein.

10. Device according to one of claims 1 to 9, characterised in that a key face arrangement (14c), known per se, or the like, as well as at least two supporting surfaces (8, 9), is provided on the body (10).

11. Device according to one of claims 1 to 10, characterised in that the body (10) has, at least below a supporting surface (8, 9), at least approximately one polygonal cross-section.

12. Device according to one of claims 1 to 10, characterised in that the body (11) has a round cross-section at least below a supporting surface (8, 9).

13. Device according to one of claims 1 to 12, characterised in that the holding means (20, 22) have, in a way known per se, two parts (22a, 22b) in pivotal connection with each other.

## Revendications

1. Dispositif de saisie d'un train de tiges de forage (10, 11) sur un support (24, 26 ; 25) tel que bâti de machine, table, anneau de saisie ou analogue, dans lequel il est disposé de manière amovible, entre le support (24, 26 ; 25) et l'élément de train de tiges de forage (10, 11), des moyens de maintien (20, 22) pouvant être amenés en prise sur des appuis plans (8, 9) dudit élément (10, 11), caractérisé en ce que, dans la zone d'au moins une extrémité de l'élément de train de tiges de forage (10, 11), il existe au moins deux surfaces d'appui (8, 9) présentant entre elles un certain espacement en direction axiale et en ce qu'il est prévu, sur des fixations séparées (20, 22), des surfaces de maintien (21, 23) associées à ces surfaces d'appui (8, 9) en vue d'une venue en prise simultanée sur celles-ci, un appui individuel étant associé à chacune de ces fixations (20, 22), tandis qu'il existe pour la fixation (22) un support à fluide sous pression (37, 38; 52, 53), dans au moins un plan.

2. Dispositif suivant la revendication 1, caractérisé en ce que l'appui (51) prévu pour la fixation (20) est agencé rigidement dans un plan.

3. Dispositif suivant la revendication 1, caractérisé en ce que l'appui prévu pour chacune des fixations (20, 22) contient, dans les différents plans, un support à fluide sous pression (37, 38; 52, 53, 58, 59; 67, 68).

4. Dispositif suivant la revendication 3, caractérisé en ce que les supports à fluide sous pression (37, 38; 52, 53, 58, 59; 67, 68) des fixations (20, 22) communiquent l'un avec l'autre en vue d'un équilibre de pression.

5. Dispositif suivant la revendication 3, caractérisé en ce qu'il est prévu, pour les fixations (20, 22), des appuis à fluide sous pression (50, 70) séparés.

6. Dispositif suivant l'une des revendications 1 à 5, caractérisé en ce qu'il est prévu, pour au moins un support à fluide sous pression (52, 53; 37, 38; 67, 68), un système à accumulateur de fluide sous pression (56) rechargeable.

7. Dispositif suivant l'une des revendications 1 à 5, caractérisé en ce qu'il est prévu, pour au moins un support à fluide sous pression (37, 38; 52, 53, 58, 59), un système à alimenter par une source de fluide sous pression (64) et comportant une soupape de limitation de pression (66).

8. Dispositif suivant l'une des revendications 1 à 7, caractérisé en ce qu'au moins un support à fluide sous pression possède plusieurs cylindres (38; 68) à pistons de support (37; 67).

9. Dispositif suivant l'une des revendications 1 à 7, caractérisé en ce qu'au moins un support à fluide sous pression comprend un cylindre annulaire (53, 59) dans lequel est logé un piston annulaire de support (52, 58).

10. Dispositif suivant l'une des revendications 1 à 9, caractérisé en ce que, outre au moins deux surfaces d'appui (8, 9), il est prévu sur le corps (10) un agencement à surface de clavetage (14c) connu en soi ou analogue.

11. Dispositif suivant l'une des revendications 1 à 10, caractérisé en ce que, au moins au-dessous d'une surface d'appui (8, 9), le corps (10) a une section au moins approximativement polygonale.

12. Dispositif suivant l'une des revendications 1 à 10, caractérisé en ce que le corps (11) a, au moins au-dessous d'une surface d'appui (8, 9), une section circulaire (60).

13. Dispositif suivant l'une des revendications 1 à 12, caractérisé en ce que les moyens de maintien (20, 22) comprennent d'une manière connue en soi, deux parties (22a, 22b) reliées entre elles de manière pivotante.

FIG. 1

0 147 511

FIG. 2

FIG. 3

3

FIG. 4

FIG. 5

FIG. 6

FIG. 7

0 147 511

FIG. 8

FIG. 9

9

FIG. 10